# EUROPEAN PATENT APPLICATION

(11) **EP 3 031 318 A1**
(43) Date of publication of application: **15.06.2016**
(21) Application number: 14004189.8
(22) Date of filing: 12.12.2014
(51) Int. Cl.: A01K 47/00

(54) **Beehive box**

(71) Applicant: Ugur, Sen, 35279 Neustadt (DE)
(72) Inventor: Ugur, Sen, 35279 Neustadt (DE)

(57) **Abstract**

This novel beehive box combines the advantages of ancient clay hives with modern box bee-hives, whilst the economical methods of using detachable frames (2) and brood combs can be used in a combination with multy-layer mesh and clay or banco outer walls (4).

## Description

### FIELD OF THE INVENTION

The invention refers to bee keeping, and particularily the keeping of domesticated bees, as the western honey bee (Apis mellifera) and the eastern correspondent (Apis cerana) to harvest her honey and to for pollination of agricultural plants.

More closely, it refers to the construction of artificial beehives and particularly in the design and layer composition of their walls.

### BACKGROUND OF THE INVENTION

In nature honey bees use caves, rock cavities and hollow trees as natural nesting sites. Members of other subgenera have exposed aerial combs. The nest is composed of multiple honeycombs, parallel to each other, with a relatively uniform bee space.

Since harvesting honey is one of the oldest agricultural art, the effectivity of beekeeping and with it the methods for attracting and holding the right species of bees swarms have constantly been ameliorated. But there is still room for improvement.

### PRIOR ART

In ancient and traditional beekeeping the artificial beehives -as there were clay pots, wooden barrels or skeps [1] simply provided an enclosure for the bee colony. Because no internal structures were provided for the bees, the bees created their own honeycombs within the hives.

However, the comb is often cross-attached and cannot be moved without destroying it.

So harvest generally destroyed the hives, until Thomas Wildman 1768 described the advantages of hives with wooden bars, whereto the bees could affix their combs [2] and detachable hoods, as an advantage against skep-based beekeeping, where the bees had to be killed to harvest the honey.

So baskets and barrels were gradually replaced by box hives of varying dimensions, comprising detachable frames, wherein the bees could easily build up their combs, often supported by pre-fabricated wax honeycomb base structures.

There are a wide variety of box designs now, started with Langstroth's US Patent Nr. 9.33 of 1852, Warré and Perone constructions and their dervates, those mostly built of wooden panels, whereof pine heartwood is said to be best.

More recent designs however have proved not to attract and hold bee swarms so well: Thermal isolation gives an advantage, but It was found, that the bees inside must be protected from harsh coldness, but need to sense cold and warmth, incident sun radiation and rain to optimize their swarm behavior [3], which has a basic impact on their honey production.

Therefore newer constructions, as with Vogeler's US 702833A electric beehive heater and tight thermal enclosures, as with Douglas' US 3.438.070A and similar solutions had not been successful. Since, as long as some basic thermal insulation is provided, bees can produce enough warmth by their own movement to withstand even harsh winters.

The same pertains to the widespread use of modern plastic foams, which proved to be counterproductive not only because their over-insulation, but also due to being prone to bloc from the atmospheric environment and prevent the dissipation of humidity, which may have impacts on the bee's health - particularly fungal infections and on the quality of honey [4].

This is because the bees work together as a group on the harvested nectar with the regurgitation and digestion until it reaches a desired quality. It is then stored in honeycomb cells. After the final regurgitation, the honeycomb is left unsealed.

In this state the nectar is still high in both water content and natural yeasts, which, unchecked, would cause the sugars in the nectar to ferment.

The process continues as bees inside the hive fan their wings, creating a strong draft across the honeycomb, which enhances evaporation of much of the water from the nectar. This reduction in water content raises the sugar concentration and prevents fermentation.

However, this process implies an acceptable humidity exchange between the interior beehive and the atmosphere, which cannot effectively be achieved just by the small entrance and exit to the box, which may additionally be blocked by the beekeeper in Winter.

### TASK OF THE INVENTION

Therefore it is the task of the here disclosed invention to find a method and construction of the beehive box, that would grant insulation with an acceptable degree of thermal and environmental control and good humidity exchange.

### DESCRIPTION OF THE INVENTION

A solution was found in that the box' wall mostly consist of banco or adobe, which is particularly adequate for temperate zones, where its thermal isolation is sufficient in hot summers and cold winters and its ability to absorb and exchange humidity produces a good and sound interior climate.

The material here applied consists of a mixture mainly of clay and fibrous, hardly rotting materials, as fine-cut straw, rice husks or glume from grains.

Other ingredients, as used for light construction; as expanded clay perls or -shales are also possible due to the fact, that wooden scaffolding is applied and therefore no particular pressure resistance is required.

This material can only be sun- or kiln dried, or even baked to tiles, which gives more rigidity, but reduces humidity exchange and soundproofing..

For protection against rain, wattle work is applied to the outside.

### CLOSER DESCRIPTION ALONG TO THE DRAWINGS

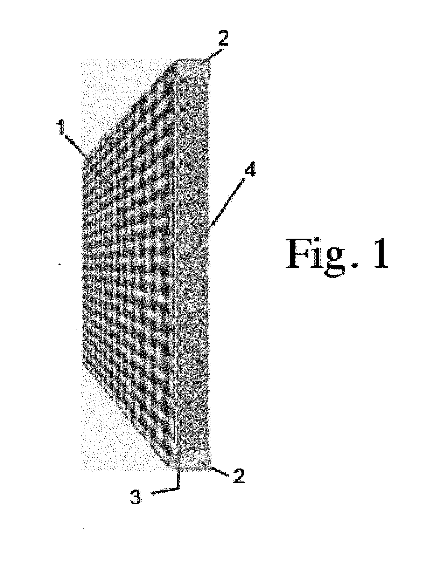

Fig.1 demonstrates the Wall structure of the beehive box It shows (from out side in): Wattle work 1 , wooden frame 2, mesh baffle for vermin protection 3 and clay or banco superstructure 4,

### REFERENCES

[1] E. P. B. Weigall , Beekeeping in Ancient Egypt in: The Treasury of Ancient Egypt: Miscellaneous Chapters on Ancient Egyptian History. (Kessinger Legacy Reprints, Whitefish MT., September 2010)
[2] Thomas Wildman, A Treatise on the Management of Bees (London, 1768, 2nd edn 1770).
[3] Shawn Eyer, The Beehive and the Stock of Knowledge. Philalethes, The Journal of Masonic Research and Letters 63.1 (Winter 2010), 35-42.
[4] Seeley, T D.; Morse, R. A. (December 1978). "Nest site selection by the honey bee, Apis mellifera". Insectes Sociaux 25 (4): 323-337.

## Claims

1. A beehive box or outer shell, mainly consisting of banco or adobe.

2. A beehive box or outer shell as to claim 1, wherein the material consists of clay and fibrous, hardly rotting materials, as fine-cut straw, rice husks or glume from grains.

3. A beehive box or outer shell as to claim 2, wherein other substance of content are expanded clay perls or clay shale.

4. A beehive box or outer shell as to one or more of the proceeding claims, wherein the clay or shale materials mounted within an wooden scaffold.

5. A beehive box or outer shell as to claim 1 - 4, wherein the clay or shale materials are sun-or kiln-dried.

6. A beehive box or outer shell as to claim 1 - 4, wherein the clay or shale materials are fired.

7. A beehive box or outer shell as to claim 1 - 6 , wherein the wall material is protected by wattle work on the outside.

8. A beehive box or outer shell as to claim 1 - 7, wherein the walls are protected against vermin by a meshed metal baffle..
